# EUROPÄISCHE PATENTSCHRIFT

(11) **EP 1 527 284 B1**
(45) Veröffentlichungstag und Bekanntmachung des Hinweises auf die Patenterteilung: **05.12.2007**
(21) Anmeldenummer: 03790641.9
(22) Anmeldetag: 17.07.2003
(51) Int. Cl.: F16C 11/06, B29C 70/34

(54) **LAGERSCHALE FÜR EIN KUGELGELENK UND VERFAHREN ZU DEREN HERSTELLUNG**
BEARING SHELL FOR A SPHERICAL JOINT AND METHOD FOR THE PRODUCTION THEREOF
COQUILLE DE PALIER POUR ARTICULATION SPHERIQUE ET SON PROCEDE DE PRODUCTION

(30) Priorität: 10.08.2002 DE 10236829
(43) Veröffentlichungstag der Anmeldung: 04.05.2005
(73) Patentinhaber: ZF Lemförder Metallwaren AG, 49448 Lemförde (DE)
(72) Erfinder: BUDDE, Frank, 49401 Damme (DE)
(86) Internationale Anmeldenummer: PCT/DE2003/002403
(87) Internationale Veröffentlichungsnummer: WO 2004/020847

(56) Entgegenhaltungen:
- DE-A- 3 038 248
- DE-A- 4 108 219
- US-A- 4 137 618

## Beschreibung

Die Erfindung betrifft eine Lagerschale aus thermoplastischem Kunststoff mit einer sphärischen Lagerfläche für ein Kugelgelenk gemäß den gattungsbildenden Merkmalen des Anspruches 1 sowie ein Verfahren zur Herstellung einer derartigen Lagerschale entsprechend den Merkmalen des Verfahrensanspruches 6.

Lagerschalen der geschilderten gattungsgemäßen Art sind in mannigfaltiger Ausgestaltung bekannt und werden vorzugsweise aus thermoplastischen Kunststoffen wie beispielsweise POM hergestellt.

Das verwendete Material für derartige Lagerschalen hat die nachteilige Eigenschaft, dass insbesondere bei erhöhten Belastungen für das mit derartigen Lagerschalen ausgerüstete Kugelgelenk das Lagerschalenmaterial zu Kriechprozessen neigt, wobei insbesondere bei längerer Beanspruchung und erhöhten Temperaturen durch die auftretenden Elastizitäten ein Ausfall des betreffenden Kugelgelenkes nicht ausgeschlossen werden kann.

Um hier Abhilfe zu schaffen, ist aus dem Stand der Technik die Möglichkeit bekannt, Kunststoffe einzusetzen, die zu der Gruppe der Duroplaste gehören. So ist beispielsweise aus der DE 41 08 219 C2 eine Lagerschale bekannt, welche aus einem Mehrkomponenten-Duroplast-Kunststoff besteht, wobei in den Kunststoff ein Fasergeflecht aus Glasfasern eingebettet ist. Es handelt sich hierbei um so genannte Kurzfasern, deren Länge in einem Bereich von 0,1 bis 1 mm liegt. Die Herstellung derartiger Lagerschalen mit eingesetztem Gewebegeflecht der geschilderten Art für erhöhte Belastungsfälle bei Kugelgelenken ist relativ aufwendig und erfordert spezielle Herstellungsschritte. Aus US 4137618 ist ein Verfahren zur Herstellung von Lagerschalen bekannt.

Aufgabe der vorliegenden Erfindung ist es daher, eine Lagerschale der gattungsgemäßen Art bereitzustellen, die auf einfache Weise kostengünstig herstellbar ist und entsprechend hohe Anforderungen hinsichtlich Belastbarkeit und Lebensdauer erfüllen kann. Darüber hinaus soll die Aufgabe gelöst werden, ein Verfahren zur Herstellung einer derartigen Kugelschale zu offenbaren, bei dem kein spezielles fertigungstechnisches Know-how im Hinblick auf die Handhabung spezieller faserverstärkter Materialien notwendig ist.

Hinsichtlich der Lagerschale wird die Aufgabe durch die im Anspruch 1 beschriebene technische Lehre gelöst. Wesentlicher Erfindungsgedanke ist hierbei, dass in den thermoplastischen Kunststoff der Lagerschale zumindest in einem Teilbereich ein Endlosfasergewebe eingebettet ist. Die Verwendung von Endlosfasergewebe in Verbindung mit dem thermoplastischen Kunststoff ermöglicht alternativ zu den bislang aus dem Stand der Technik verwendeten Kurzfasern in Verbindung mit Duroplasten eine hohe Festigkeit und Steifigkeit - mit dynamischen Druckfestigkeitswerten bis 200 N/mm² - sowie eine ausreichende Schlagzähigkeit der erfindungsgemäßen Lagerschalen. Darüber hinaus ist die Temperaturbeständigkeit, Korrosionsbeständigkeit und chemische Beständigkeit derartiger mit Endlosfasern versehener Thermoplaste insbesondere auch für die Verwendung bei Lagerschalen positiv zu bewerten. Die Einbettung des Endlosfasergewebes führt darüber hinaus im Gegensatz zu üblichen thermoplastischen Werkstoffen zu einer hohen Kriechfestigkeit sowie zu geringen Abriebwerten. Dabei bietet das thermoplastische Grundmaterial der Lagerschale die Möglichkeit, diese in einem einfachen Umformprozess dadurch zu verändern, dass das Kunststoffmaterial über seine Schmelztemperatur hinaus erwärmt wird.

Als vorteilhafte Materialien für das Endlosfasergewebe hat sich insbesondere die Verwendung von Glasfasern, Kohlenstofffasern und Aramidfasern ergeben.

Das Verfahren zur Herstellung einer Lagerschale mit den oben beschriebenen erfindungswesentlichen Merkmalen ist durch die im Anspruch 6 offenbarte technische Lehre gekennzeichnet. Wesentlich dabei ist, dass zunächst aus einem plattenförmigen Thermoplastkunststoffhalbzeug, in welches ein Endlosfasergewebe eingebettet worden ist, ein im Wesentlichen mit kreisförmiger Außenkontur versehenes Lagerschalenrohteil mechanisch herausgearbeitet wird, und dass in einem anschließenden Bearbeitungsgang durch Erwärmung des Thermoplastkunst-stoffmaterials über dessen Schmelztemperatur und anschließende mechanische Umformung des Lagerschalenrohteiles die Endgestalt der Lagerschale mit sphärischer Lagerfläche herbeigeführt wird.

Durch die geschilderten Verfahrensschritte lässt sich eine äußerst kostengünstige Fertigung der Lagerschale realisieren, da die verwendeten Thermoplastkunststoff-halbzeuge mit eingebettetem Endlosfasergewebe sich rationell in großen Stückzahlen zum Beispiel auf Doppelbandpressen fertigen lassen. Die Herausarbeitung der Lagerschalenrohteile mittels mechanischer Bearbeitung wie beispielsweise Sägen, Fräsen, Wasserstrahlschneiden und dergleichen, bietet ebenfalls die Möglichkeit einer kostengünstigen Fertigung. Schließlich ist die Grundkomponente des thermoplastischen Halbzeuges wesentlich für eine leichte Umformung des Lagerschalenrohteiles in die fertige Gestalt der Lagerschale.

Entsprechend den in den auf den Anspruch 6 rückbezogenen Unteransprüchen dargelegten erfinderischen Weiterbildungen des geschilderten Verfahrens kann es insbesondere vorteilhaft sein, in die kreisförmige Außenkontur des Lagerschalenrohteiles mindestens eine sich zur Mitte des Lagerschalenrohteiles erstreckende schlitzförmige Ausnehmung einzubringen. Die schlitzförmige Ausnehmung erleichtert die Verformung des planen Lagerschalenrohteiles in eine sphärische Form, da unnötige Verdrängung oder Zusammenpressung von Material auf Grund der endgültigen Formgebung unterbleiben kann. Die schlitzförmige Ausnehmung kann dabei unterschiedliche Gestalt aufweisen.

Eine weitere vorteilhafte Ausgestaltung des Verfahrens sieht darüber hinaus vor, das Lagerschalenrohteil als Kreisring auszubilden, wobei im Rahmen des Umformvorganges zur Erstellung einer sphärischen Lagerschale zusätzliche aus thermoplastischem Kunststoffmaterial bestehende Bereiche ohne Endlosfasergewebe an den vorhandenen Kreisringquerschnitt angespritzt werden können. Auf diese Weise lassen sich besonders hoch beanspruchte Teilbereiche der Lagerschale mit dem sehr widerstandsfähigen thermoplastischen Kunststoffmaterial mit der Entlosfasergewebeeinbettung ausgestalten, wohingegen in niedrig beanspruchten Bereichen das reine thermoplastische Kunststoffmaterial verwendet werden kann.

Selbstverständlich ist es dabei denkbar, zur leichteren Umformung des planen kreisringförmigen Lagerschalenrohteiles in dieses ebenfalls schlitzförmige Ausnehmungen einzubringen. Die erfindungsgemäße Lagerschale sowie das zugehörige Verfahren zu deren Herstellung ist anhand der beigefügten Figurendarstellungen nachfolgend näher beschrieben.

Es zeigt:
- Fig. 1A: die Draufsicht auf ein Lagerschalenrohteil nach dessen Herausarbeitung aus einem plattenförmigen Thermoplastkunststoffhalbzeug,
- Fig. 1B: eine Schnittdarstellung entlang der Schnittlinie A-A aus Figur 1A,
- Fig. 2A: eine Draufsicht auf das sphärisch verformte Lagerschalenrohteil aus Figur 1A,
- Fig. 2B: eine Schnittdarstellung entlang der Schnittlinie B-B aus Figur 2B,
- Fig. 3A, 3B, 3C: Schnittdarstellung durch erfindungsgemäße Ausgestaltungen der Lagerschale zur Verwendung in unterschiedlichen Kugelgelenkarten,
- Fig. 4A: eine Draufsicht auf einen kreisringförmig ausgebildetes Lagerschalenrohteil vor dessen Verformung,
- Fig. 4B: eine Schnittdarstellung des Lagerschalenrohteiles aus Figur 4A entlang der Schnittlinie C-C,
- Fig. 5A: eine Draufsicht auf das sphärisch umgeformte Lagerschalenrohteil aus Figur 4A,
- Fig. 5B: eine Schnittdarstellung entsprechend der Schnittlinie D-D aus Figur 5A,
- Fig. 6A, 6B, 6C: Schnittdarstellungen von Lagerschalen entsprechend der Figuren 4A bis 4D zur Verwendung in unterschiedlichen Kugelgelenken.

Die Herstellung einer erfindungsgemäßen Lagerschale geschieht unter Einsatz eines plattenförmigen Thermoplastkunststoffhalbzeuges, in welches ein Endlosfasergewebe aus Glasfasern, Kunststofffasern, Aramidfasern oder eine Kombination der genannten Fasern eingebettet worden ist. Das beschriebene Halbzeug wird in so genannten Doppelbandpressen hergestellt, wobei der Herstellprozess es erlaubt, auf der einen Seite des plattenförmigen Halbzeuges Kohlenstofffaserschichten einzubringen und auf der gegenüberliegenden Seite Glas- oder Aramidfasern. Die Kosten der Herstellung derartiger auch als Organobleche bezeichneter Halbzeuge können im Vergleich zu anderen endlosfaserverstärkten Strukturen als günstig bezeichnet werden. Auf Grund der Einbettung eines Endlosfasergewebes sind Festigkeit und Steifigkeit derartiger Organobleche in Bereichen bis 200 N/mm² dynamischer Druckfestigkeit angesiedelt. Hinzu kommen hohe Temperaturbeständigkeit, Korrosionsbeständigkeit und chemische Beständigkeit derartiger Kunststoffhalbzeuge. Trotz dieser Vorteile im Hinblick auf die mechanischen Eigenschaften lassen sich derartige Halbzeuge thermisch umformen, indem die Grundstruktur des Thermoplastes über dessen Schmelztemperatur aufgeheizt wird.

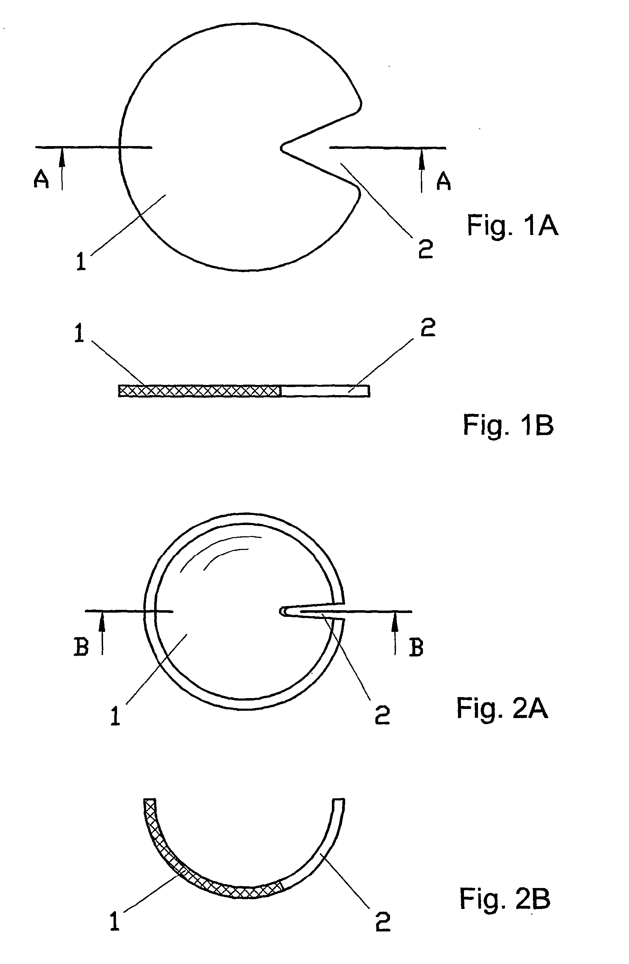

In der Figur 1A ist ein Lagerschalenrohrteil dargestellt, welches aus einem plattenförmigen Halbzeug der oben geschilderten Art durch mechanische Bearbeitungsschritte wie beispielsweise Fräsen, Schneiden oder Stanzen herausgearbeitet worden ist. Auf Grund der zu bildenden sphärischen Endform der Lagerschale ist der Grundriss des Lagerschalenrohteiles 1 im Wesentlichen kreisförmig, wobei aus der Figur 1A ersichtlich ist, dass in die kreisförmige Außenkontur des Lagerschalenrohteiles 1 mindestens eine Ausnehmung 2 eingeformt ist, welche eine relativ breite Öffnung zur Außenkontur aufweist und sich zum Inneren, d.h. zur Mitte des plattenförmig ausgebildeten Lagerschalenrohteiles 1 verjüngt. Zur Verdeutlichung des plattenförmigen Querschnittes ist dieser zusätzlich in der Figur 1B in Schnittdarstellung verdeutlicht.

Nachdem das Lagerschalenrohteil 1 entsprechend der Figur 1A erstellt worden ist, findet zur Ausbildung der Endform der erfindungsgemäßen Lagerschale ein Umformvorgang statt, dem zunächst die Erwärmung des Thermoplastkunststoffmaterials des Lagerschalenrohteiles 1 über die entsprechende Schmelztemperatur des Thermoplastes vorausgeht.

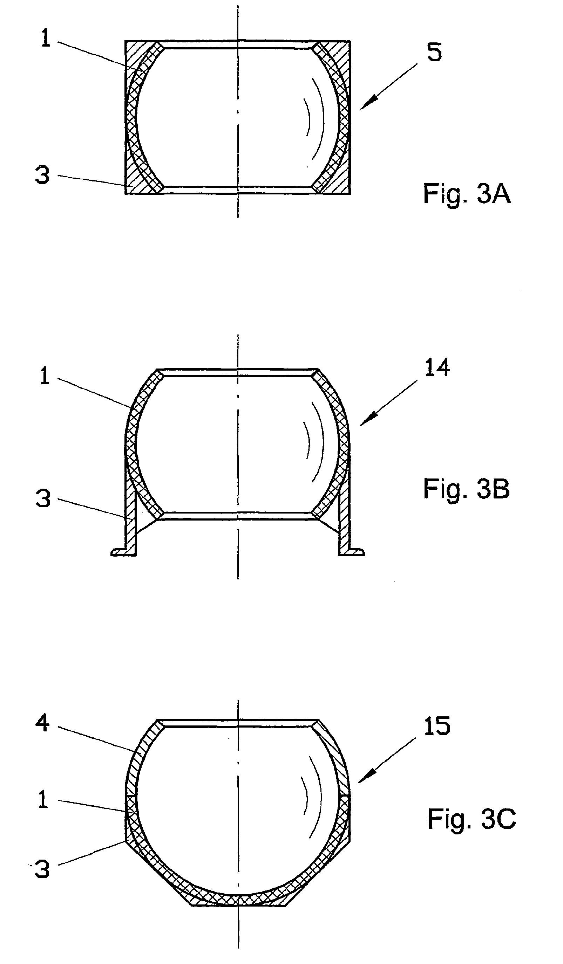

Nach der Erwärmung wird durch entsprechend geeignete Werkzeuge eine sphärische Form des Lagerschalenrohteiles 1 entsprechend der Schnittdarstellung der Figur 2B herbeigeführt. Durch die Umformung in eine halbkugelförmige dreidimensionale Form wird gleichzeitig die Ausnehmung 2 entscheidend verkleinert bzw. gegebenenfalls gänzlich geschlossen, wie dies die Draufsicht der Figur 2A zeigt. Mittels der Verfahrensschritte, wie sie in den Figuren 1A bis 2B illustriert sind, lassen sich nunmehr beispielsweise die in den Figuren 3A bis 3C dargestellten Lagerschalen 5 fertigen. Allen dargestellten Ausführungsbeispielen ist gemeinsam, dass die aus dem Lagerschalenrohteil 1 geformte Lagerschale 5 mit zusätzlichen thermoplastischen Ansatzelementen 3 beispielsweise durch einen Anspritzvorgang versehen worden ist. Die zusätzlichen Ansatzelemente 3 dienen vorrangig der konstruktiven Ausgestaltung der Außenkontur zur Festlegung der fertigen Lagerschale 5 in einem hier nicht näher dargestellten Kugelgelenkgehäuse.

In der Figur 3A ist beispielsweise eine Lagerschale 5 für ein Hülsengelenk dargestellt. Die Figur 3B zeigt eine Lagerschale 14, die insbesondere in radialer Richtung belastet werden kann. Dabei können die mit dem Endlosfasergewebe verstärkten Lagerschalen 5, 14 entsprechend diesem Ausführungsbeispiel auch aus zwei gegenüberliegenden Halbschalen ausgebildet werden. Die Figur 1C zeigt schließlich eine Lagerschale 15 im Wesentlichen entsprechend der Darstellung der Figuren 2A bzw. 2B mit einem an diese Lagerschale 15 angespritzten Thermoplastansatz.

Prinzipiell besteht die Möglichkeit, die sphärisch ausgebildete Zusatzschale 4 im Kugelgelenk als separates Bauteil zu montieren oder diese an die bereits gefertigte Lagerschale 5 mit Endlosfasergewebeeinbettung anzuspritzen. In derartigen Fällen sollte die faserverstärkte Lagerschale 5 und die angespritzte Zusatzschale 4 aus dem gleichen thermoplastischen Material gefertigt sein, um eine gute Anbindung und Haftung der Bauteile aneinander zu realisieren.

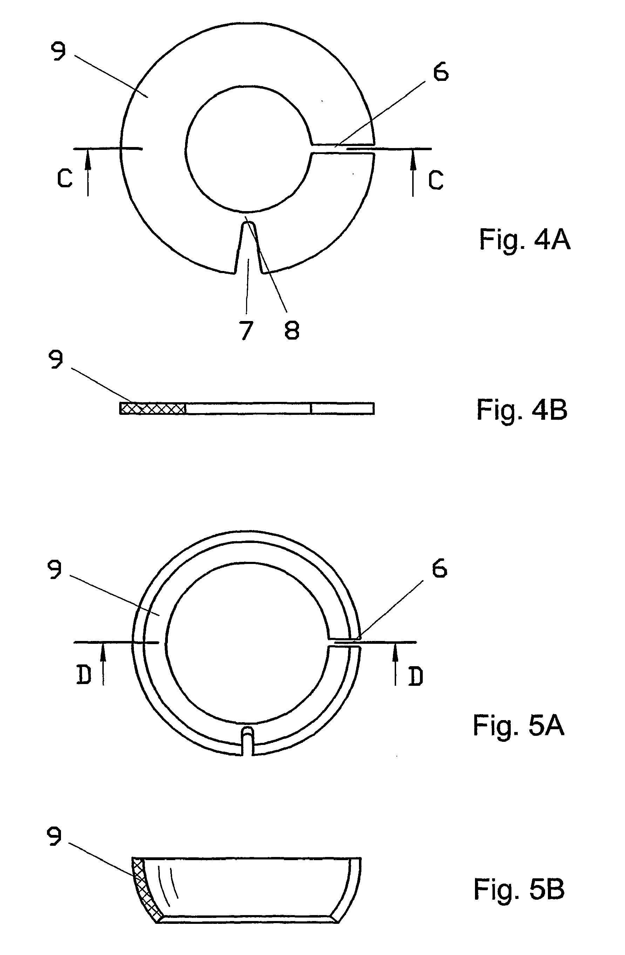

Alternativ zu der Herstellung von Lagerschalen entsprechend den bisher geschilderten Ausführungsbeispielen lässt sich aus dem plattenförmigen Thermoplastkunststoffhalbzeug entsprechend der Figur 4A auch ein flacher Kreisring ausformen. In diesen Kreisring können zur Erleichterung späterer sphärischer Verformungen, wie dies insbesondere in der Figur 5B als Enddarstellung ersichtlich sind, eine oder mehrere schlitzförmige Ausnehmungen eingearbeitet werden. In der Figur 4A sind zwei mögliche Varianten dargestellt, wobei die Ausnehmung 6 als durchgehender Schlitz ausgebildet ist, wohingegen die Ausnehmung 7 sich zwar ebenfalls schlitzförmig in Richtung des Kreisringmittelpunktes erstreckt, jedoch in einem Nutgrund 8 endet.

Denkbar sind natürlich auch mehrere der Ausnehmungen 7 verteilt über den Kreisringumfang des Lagerschalenrohteiles 9. Nach dem Fertigungsschritt des Herausarbeitens des Lagerschalenrohteiles 9 aus einem plattenförmigen Kunststoffhalbzeug wird das Lagerschalenrohteil 9 einem Verformungsprozess unterzogen, der die thermoplastischen Eigenschaften des gewählten Kunststoffmaterials nutzt, in dem dieses auf eine Temperatur oberhalb seiner Schmelztemperatur erwärmt wird. Anschließend erfolgt durch geeignete Verformungswerkzeuge die Herstellung der sphärischen Kontur, wie sie in der Figur 5B dargestellt ist.

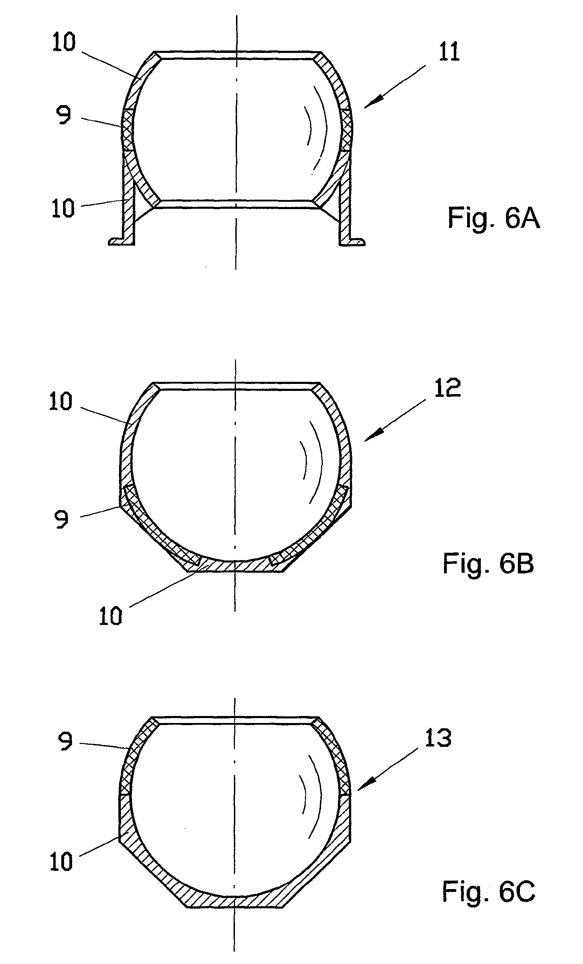

In den Figuren 6A bis 6C sind wiederum verschiedene erfindungsgemäße Lagerschalen 11, 12, 13 dargestellt, die neben den Bereichen mit dem eingebetteten Endlosfasergewebe zusätzliche Ansätze 10 aufweisen, die beispielsweise im Rahmen eines Spritzgussprozesses an die vorgeformten Lagerschalenrohteile 9 angefonnt werden können. Selbstverständlich lassen sich natürlich die dargestellten zusätzlichen Ansätze auch als separate Bauteile zusammen mit dem Lagerschalenrohteil 9 in einem entsprechenden Kugelgelenkgehäuse zusammen montieren.

Die Figur 6A zeigt ähnlich der Darstellung der Figur 3B eine insbesondere für radiale Belastungen geeignete Lagerschale. 11. In der Figur 6B ist ähnlich der Figur 3C die Lagerschale 12 eines Traggelenkes dargestellt. Die Figur 6C zeigt schließlich die spezielle konstruktive Gestaltung einer Lagerschale 13 für ein Axialgelenk.

Allen dargestellten Ausführungsbeispielen ist gemeinsam, dass zumindest die hochbelasteten Bereiche der dargestellten Lagerschalen mit einem Endlosfasergewebe verstärkt sind, wobei die speziellen thermoplastischen Eigenschaften des Grundmaterials die Herstellung derartiger Lagerschalen aus preiswert produziertem Kunststoffhalbzeug ermöglichen.

### Bezugszeichenliste

- 1: Lagerschalenrohteil
- 2: Ausnehmung
- 3: thermoplastische Ansatzelemente
- 4: Zusatzschale
- 5: Lagerschale
- 6: Ausnehmung
- 7: Ausnehmung
- 8: Nutgrund
- 9: Lagerschalenrohteil
- 10: zusätzliche Ansätze
- 11: Lagerschale
- 12: Lagerschale
- 13: Lagerschale
- 14: Lagerschale
- 15: Lagerschale

## Patentansprüche

1. Lagerschale aus Kunststoff mit einer sphärischen Lagerfläche für ein Kugelgelenk vorzugsweise zum Einsatz in Fahrwerksaufhängungen oder Lenkungen von Kraftfahrzeugen, welches im Wesentlichen ein Gelenkgehäuse und einen aus einer Kugelfläche und einem Zapfenteil bestehenden Lagerzapfen, welcher mit der Kugelfläche dreh- und auslenkbar in der sphärischen Lagerfläche der im Gelenkgehäuse festlegbaren Lagerschale zu lagern ist, aufweist,
**dadurch gekennzeichnet, dass** der Kunststoff thermoplastisch ist und in den thermoplastischen Kunststoff der Lagerschale (5, 11, 12, 13, 14, 15) zumindest in einem Teilbereich ein Endlosfasergewebe eingebettet ist.

2. Lagerschale nach Anspruch 1,
**dadurch gekennzeichnet, dass**
das Endlosfasergewebe Glasfasern aufweist.

3. Lagerschale nach Anspruch 1,
**dadurch gekennzeichnet, dass**
das Endlosfasergewebe Kohlenstofffasern aufweist.

4. Lagerschale nach Anspruch 1,
**dadurch gekennzeichnet, dass**
das Endlosfasergewebe Aramidfasern aufweist.

5. Lagerschale nach Anspruch 1,
**dadurch gekennzeichnet, dass**
das Endlosfasergewebe Glasfasern, Kohlenstofffasern und Aramidfasern aufweist.

6. Verfahren zur Herstellung einer Lagerschale aus Kunststoff mit einer sphärischen Lagerfläche für ein Kugelgelenk vorzugsweise zum Einsatz in Fahrwerksaufhängungen oder Lenkungen von Kraftfahrzeugen, welches im Wesentlichen ein Gelenkgehäuse und einen aus einer Kugelfläche und einem Zapfenteil bestehenden Lagerzapfen, welcher mit der Kugelfläche dreh- und auslenkbar in der sphärischen Lagerfläche der im Gelenkgehäuse festlegbaren Lagerschale zu lagern ist, aufweist,
**dadurch gekennzeichnet, dass**
aus einem plattenförmigen Thermoplastkunststoffhalbzeug, in welches ein Endlosfasergewebe eingebettet worden ist, ein im Wesentlichen mit kreisförmiger Außenkontur versehenes Lagerschalenrohteil (1, 9) mechanisch herausgearbeitet wird und dass in einem anschließenden Bearbeitungsgang durch Erwärmung des Thermoplastkunststoffmateriales über dessen Schmelztemperatur und anschließende mechanische Umformung des Lagerschalenrohteiles (1, 9) die Endgestalt der Lagerschale (5, 11, 12, 13, 14, 15) mit sphärischer Lagerfläche herbeigeführt wird.

7. Verfahren nach Anspruch 6,
**dadurch gekennzeichnet, dass**
in die kreisförmige Außenkontur des Lagerschalenrohteiles (1, 9) mindestens eine sich zur Mitte des Lagerschalenrohteiles erstreckende schlitzförmige Ausnehmung (2, 6, 7) eingebracht wird.

8. Verfahren nach Anspruch 7,
**dadurch gekennzeichnet, dass**
die Breite der schlitzförmigen Ausnehmung (2, 7) sich von ihrem zum offenen Randbereich der Außenkontur offenen Ende zum inneren Schlitzgrund (8) hin verkleinert.

9. Verfahren nach Anspruch 6,
**dadurch gekennzeichnet, dass**
das Lagerschalenrohteil (9) als Kreisring ausgebildet wird.

10. Verfahren nach Anspruch 9,
**dadurch gekennzeichnet, dass**
das kreisringförmige Lagerschalenrohteil (9) mit einer durchgehenden schlitzförmigen Ausnehmung (6) von der kreisförmigen Außenkontur zur kreisförmigen Innenkontur versehen wird.

11. Verfahren nach Anspruch 9,
**dadurch gekennzeichnet, dass**
das kreisringförmige Lagerschalenrohteil (9) mit mindestens einer schlitzförmigen Ausnehmung (7, 6) versehen wird, welche zur kreisförmigen Außenkontur hin geöffnet ist und sich in Richtung des Mittelpunktes des Lagerschalenrohteiles erstreckt.

12. Verfahren nach einem der Ansprüche 6 bis 11,
**dadurch gekennzeichnet, dass**
an das Lagerschalenrohteil (1, 9) im Rahmen des Umformvorganges zur Erstellung der sphärischen Lagerfläche aus thermoplastischem Kunststoffmaterial bestehende Bereiche ohne Endlosfasergewebe angespritzt werden.

## Claims

1. Bearing shell made of a polymer having a spherical bearing surface for a ball joint preferably for use in chassis suspensions or steering systems of motor vehicles that substantially comprises a joint housing and a bearing journal, which comprises a spherical surface and a journal part and is to be mounted by the spherical surface in a rotatable and deflectable manner in the spherical bearing surface of the bearing shell, which is fixable in the joint housing,
**characterized in that** the polymer is a thermoplastic polymer and a continuous strand fabric is embedded into the thermoplastic polymer of the bearing shell (5, 11, 12, 13, 14, 15) at least in a sub-region.

2. Bearing shell according to claim 1,
**characterized in that**
the continuous strand fabric comprises glass fibres.

3. Bearing shell according to claim 1,
**characterized in that**
the continuous strand fabric comprises carbon fibres.

4. Bearing shell according to claim 1,
**characterized in that**
the continuous strand fabric comprises aramid fibres.

5. Bearing shell according to claim 1,
**characterized in that**
the continuous strand fabric comprises glass fibres, carbon fibres and aramid fibres.

6. Method of manufacturing a bearing shell made of a polymer having a spherical bearing surface for a ball joint preferably for use in chassis suspensions or steering systems of motor vehicles that substantially comprises a joint housing and a bearing journal, which comprises a spherical surface and a journal part and is to be mounted by the spherical surface in a rotatable and deflectable manner in the spherical bearing surface of the bearing shell, which is fixable in the joint housing,
**characterized in that**
a bearing shell blank (1, 9) provided substantially with a circular external contour is mechanically worked from a plate-shaped thermoplastic polymer semi-finished product, into which a continuous strand fabric has been embedded, and that in a subsequent machining operation by heating the thermoplastic polymer material to a temperature above its melting point and then mechanically reshaping the bearing shell blank (1, 9) the finished shape of the bearing shell (5, 11, 12, 13, 14, 15) with a spherical bearing surface is obtained.

7. Method according to claim 6,
**characterized in that**
there is introduced into the circular external contour of the bearing shell blank (1, 9) at least one slot-shaped recess (2, 6, 7) that extends towards the centre of the bearing shell blank.

8. Method according to claim 7,
**characterized in that**
the width of the slot-shaped recess (2, 7) decreases from its end, which is open towards the open edge region of the external contour, in the direction of the inner slot base (8).

9. Method according to claim 6,
**characterized in that**
the bearing shell blank (9) takes the form of an annulus.

10. Method according to claim 9,
**characterized in that**
the annular bearing shell blank (9) is provided with a continuous slot-shaped recess (6) from the circular external contour to the circular internal contour.

11. Method according to claim 9,
**characterized in that**
the annular bearing shell blank (9) is provided with at least one slot-shaped recess (7, 6), which is open towards the circular external contour and extends in the direction of the centre of the bearing shell blank.

12. Method according to one of claims 6 to 11,
**characterized in that**
regions made of thermoplastic polymer material without continuous strand fabric are injection moulded onto the bearing shell blank (1, 9) in the course of the reshaping operation to produce the spherical bearing surface.

## Revendications

1. Coquille de coussinet en matériau synthétique ayant une surface de coussinet sphérique pour une articulation sphérique, destinée à être utilisée de préférence dans des suspensions de châssis ou des directions de véhicules, qui présente essentiellement un boîtier d'articulation et un tourillon constitué d'un tenon et d'une surface sphérique tourillon qui doit être monté à rotation et de façon à pouvoir être dévié, avec la surface sphérique, dans la surface de coussinet sphérique de la coquille de coussinet fixable dans le boîtier d'articulation,
**caractérisée en ce que** le matériau synthétique est thermoplastique et **en ce qu'**un tissu de filaments est noyé dans le matériau synthétique thermoplastique de la coquille de coussinet (5, 11, 12, 13, 14, 15), au moins dans une zone partielle.

2. Coquille de coussinet selon la revendication 1,
**caractérisée en ce que**
le tissu de filaments présente des fibres de verre.

3. Coquille de coussinet selon la revendication 1,
**caractérisée en ce que**
le tissu de filaments présente des fibres de carbone.

4. Coquille de coussinet selon la revendication 1,
**caractérisée en ce que**
le tissu de filaments présente des fibres d'aramide.

5. Coquille de coussinet selon la revendication 1,
**caractérisée en ce que**
le tissu de filaments présente des fibres de verre, des fibres de carbone et des fibres d'aramide.

6. Procédé de fabrication d'une coquille de coussinet en matériau synthétique ayant une surface de coussinet sphérique pour une articulation sphérique, destinée à être utilisée de préférence dans des suspensions de châssis ou des directions de véhicules, qui présente essentiellement un boîtier d'articulation et un tourillon constitué d'une surface sphérique et d'un tenon, qui doit être monté à rotation et de façon à pouvoir être dévié, avec la surface sphérique, dans la surface de coussinet sphérique de la coquille de coussinet fixable dans le boîtier d'articulation,
**caractérisé en ce que**
l'on façonne tout d'abord mécaniquement une ébauche de coquille de coussinet (1, 9), pourvue sensiblement d'un contour externe circulaire, à partir d'un produit semi-fini en matériau synthétique thermoplastique en forme de plaque, dans lequel a été noyé un tissu de filaments, et **en ce que** l'on obtient la forme finale de la coquille de coussinet (5, 11, 12, 13, 14, 15) avec une surface de coussinet sphérique au cours d'une opération de traitement ultérieure, par chauffage du matériau synthétique thermoplastique au-dessus de sa température de fusion, puis déformation mécanique de l'ébauche de coquille de coussinet (1, 9).

7. Procédé selon la revendication 6,
**caractérisé en ce que**,
dans le contour externe circulaire de l'ébauche de coquille de coussinet (1, 9), on ménage au moins un évidement (2, 6, 7) en forme de fente s'étendant vers le centre de l'ébauche de la coquille de coussinet.

8. Procédé selon la revendication 7,
**caractérisé en ce que**
la largeur de l'évidement en forme de fente (2, 7) se réduit de son extrémité ouverte vers la zone marginale ouverte du contour externe, jusqu'au fond de la fente interne (8).

9. Procédé selon la revendication 6,
**caractérisé en ce que**
l'ébauche de coquille de coussinet (9) se présente sous la forme d'un anneau circulaire.

10. Procédé selon la revendication 9,
**caractérisé en ce que**
l'ébauche de coquille de coussinet (9) en forme d'anneau circulaire est pourvue d'un évidement continu en forme de fente (6) du contour externe circulaire au contour interne circulaire.

11. Procédé selon la revendication 9,
**caractérisé en ce que**
l'ébauche de coquille de coussinet (9) en forme d'anneau circulaire est pourvue d'au moins un évidement en forme de fente (7, 6), qui est ouvert vers le contour externe circulaire et s'étend en direction du centre de l'ébauche de coquille de coussinet.

12. Procédé selon l'une quelconque des revendications 6 à 11,
**caractérisé en ce que**
des zones formées d'un matériau synthétique thermoplastique sans tissu de filaments peuvent être moulées par injection sur l'ébauche de coquille de coussinet (1, 9), dans le cadre de l'opération de déformation destinée à produire la surface de coussinet sphérique.
